# EUROPÄISCHE PATENTANMELDUNG

(11) **EP 4 600 222 A1**
(43) Veröffentlichungstag der Anmeldung: **13.08.2025**
(21) Anmeldenummer: 25154593.5
(22) Anmeldetag: 29.01.2025
(51) Int. Cl.: C02F 1/467, C25B 1/34, C25B 15/029, C25B 15/08, A61L 2/03, A61L 2/24, C25B 1/26, C02F 103/02

(54) **BEREITSTELLEN VON REINIGUNGSMITTEL VOR ORT**

(30) Priorität: 08.02.2024 DE 102024201152
(71) Anmelder: BSH Hausgeräte GmbH, 81739 München (DE)
(72) Erfinder: Fremerey, Maximilian, 97633 Saal (DE); Paul, Mario, 97708 Steinach (DE); Back, Sebastian, 97724 Burglauer (DE)

(57) **Zusammenfassung**

Ein Verfahren (200) zum Bereitstellen eines Reinigungsmittels umfasst Schritte des Zuführens von Wasser und einem vorbestimmten Salz in ein Reaktionsgefäß (120), sodass eine wässrige Lösung (125) des Salzes entsteht; des Anlegens einer vorbestimmten elektrischen Gleichspannung an Elektroden (130) im Reaktionsgefäß (120), sodass ein elektrischer Strom durch die Lösung (125) fließt, um mittels einer Redox-Reaktion das Reinigungsmittel zu bilden; und des Bereitstellens von Flüssigkeit, in der das Reinigungsmittel gebildet ist, aus dem Reaktionsgefäß (120). Dabei wird die Stärke des durch das Reaktionsgefäß (120) fließenden elektrischen Stroms bestimmt; und ein Verhältnis von zugeführtem Wasser und zugeführtem Salz wird derart gesteuert, dass sich eine vorbestimmte Stromstärke einstellt.

## Beschreibung

Die vorliegende Erfindung betrifft die Bereitstellung von Reinigungsmittel. Insbesondere betrifft die Erfindung die Bereitstellung von Reinigungsmittel am Ort eines Bedarfs.

In einem Haushalt wird zur Reinigung einer Bodenfläche Wasser mit einem Reinigungsmittel verwendet. Das Reinigungsmittel soll eine Verunreinigung auf der Bodenfläche ablösen, sich mit ihr verbinden und zusammen mit Wasser von der Oberfläche entfernt werden. Die Bodenfläche kann manuell oder mittels eines automatischen Bodenreinigers behandelt werden.

Zur Entfernung von Verunreinigungen verfügt das Reinigungsmittel über sogenannte aktive Komponenten. Diese können beispielsweise Tenside, Säuren oder Basen umfassen. Bei korrekter Anwendung und Dosierung kann die Verwendung von Reinigungsmitteln zu guten und hygienischen Reinigungsergebnissen führen. Ein Benutzer kann Reinigungsmittel zu hoch dosieren, so dass mehr Reinigungsmittel als erforderlich eingesetzt wird. Unverbrauchtes Reinigungsmittel kann ins Abwasser gelangen und muss in einem aufwendigen Klärungsprozess daraus wieder entfernt werden.

Es wurde vorgeschlagen, Reinigungsmittel erst unmittelbar an dem Ort bereitzustellen, an dem es eingesetzt werden soll. Beispielsweise kann ein Ozongenerator bzw. eine Kaltplasmaquelle aus Luft ein ionisierendes Gas herstellen, welches neben Ozon verschiedene Nitrat- und Nitritverbindungen enthält. Dieses Gas kann in Wasser eingeleitet werden, sodass u. a. geringe Anteile an Wasserstoffperoxid und Salpetersäure gebildet werden. Die so entstehende Reinigungslösung kann effektiv gegen Schmutz wirken und Mikroorganismen inaktivieren.

Bestehende Techniken verwenden relativ langsam ablaufende Prozesse, sodass sie in einem Haushalt kaum praktikabel eingesetzt werden können. Außerdem erlauben viele Ansätze nicht das bedarfsgesteuerte Bereitstellen einer gewünschten Menge oder Konzentration eines Reinigungsmittels.

Der vorliegenden Erfindung liegt die Aufgabe zugrunde, eine verbesserte Technik anzugeben, um Reinigungsmittel bedarfsgesteuert bereitzustellen. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Bereitstellen eines Reinigungsmittels Schritte des Zuführens von Wasser und einem vorbestimmten Salz in ein Reaktionsgefäß, sodass eine wässrige Lösung des Salzes entsteht; des Anlegens einer vorbestimmten elektrischen Gleichspannung an Elektroden im Reaktionsgefäß, sodass ein elektrischer Strom durch die Lösung fließt, um mittels einer Redox-Reaktion das Reinigungsmittel zu bilden; und des Bereitstellens von Flüssigkeit, in der das Reinigungsmittel gebildet ist, aus dem Reaktionsgefäß. Dabei wird die Stärke des durch das Reaktionsgefäß fließenden elektrischen Stroms bestimmt; und ein Verhältnis von zugeführtem Wasser und zugeführtem Salz wird derart gesteuert, dass sich eine vorbestimmte Stromstärke einstellt.

Mittels des beschriebenen Verfahrens kann eine Konzentration von Reinigungsmittel in einer Flüssigkeit gesteuert werden. Die Flüssigkeit kann zur Reinigung einer Oberfläche in einem Haushalt und/oder zur Deaktivierung von dort befindlichen Mikroorganismen verwendet werden. Für einen Bereich wie eine Küche, einen Eingangsbereich oder ein Bad kann das Reinigungsmittel in höherer Konzentration bereitgestellt werden, da die genannten Bereiche in der Regel einer höheren Verschmutzung unterliegen. Ein Bereich, der einer geringeren Verschmutzung unterliegt, beispielsweise ein Schlafzimmer oder ein Kinderzimmer, kann mit einer geringeren Konzentration von Reinigungsmittel in der Flüssigkeit behandelt werden.

Bereitgestelltes Reinigungsmittel kann verbessert unmittelbar an einer zu bearbeitenden Oberfläche zum Lösen und Binden von Schmutz eingesetzt werden. Das bereitgestellte Reinigungsmittel kann verbessert ausgenutzt werden, und die Freisetzung von unverbrauchtem Reinigungsmittel kann verringert sein.

Es ist bevorzugt, dass zugeführte Mengen von Wasser und Salz eine abgeführte Menge von Reinigungsmittel in Flüssigkeit ausgleichen. Dazu kann gerade so viel Wasser und Salz in das Reaktionsgefäß zugeführt werden, dass eine Menge von im Reaktionsgefäß aufgenommener Flüssigkeit konstant gehalten wird.

In einer Ausführungsform kann das Reinigungsmittel im Reaktionsgefäß bereitgestellt und danach sukzessive verbraucht werden. Erst wenn der Pegel an Flüssigkeit im Reaktionsgefäß unter einen vorbestimmten Stand gesunken ist, kann weiteres Wasser und weiteres Salz zugeführt und neues Reinigungsmittel durch Elektrolyse bereitgestellt werden.

In einer anderen Ausführungsform werden kontinuierlich Wasser und/oder Salz zugeführt, und Flüssigkeit mit gebildetem Reinigungsmittel wird kontinuierlich abgeführt. Das Reinigungsmittel kann kontinuierlich gebildet werden, sodass dessen Konzentration in der Flüssigkeit dynamisch verändert werden kann. Das Reaktionsgefäß kann klein ausgeführt sein und nach Beendigung eines Reinigungsvorgangs kann nur wenig Flüssigkeit mit Reinigungsmittel im Reaktionsgefäß verbleiben.

Es ist bevorzugt, dass die vorbestimmte Stromstärke in Abhängigkeit einer gewünschten Konzentration von gebildetem Reinigungsmittel in der bereitgestellten Flüssigkeit bestimmt wird.

Der durch die wässrige Lösung geleitete elektrische Strom bewirkt eine elektrolytische Reaktion, bei welcher Elektronen zwischen Reaktionspartnern ausgetauscht werden können. Je mehr Redox-Reaktionen an den Elektroden ablaufen, bei denen in der Flüssigkeit gelöste Ionen ihre Elektronen abgeben bzw. aufnehmen, desto stärker kann der fließende Strom sein. Der Strom kann wieder abnehmen, wenn es auf Grund von Energiezufuhr, Elektrodengröße, Elektrodenform und Konzentration der in der Flüssigkeit gelösten Ionen zu einer Sättigung kommt. Auf diese Weise kann die Konzentration von Reinigungsmittel in der Flüssigkeit anhand der Stärke des fließenden Stroms abgeschätzt werden. Fließt mehr Strom als vorbestimmt, so kann Wasser in die Lösung zugegeben werden, um den fließenden Strom zu senken. Umgekehrt kann, wenn der fließende Strom zu gering ist, Salz zugegeben werden, um den Strom zu steigern.

Die vorbestimmte Stromstärke kann bezüglich einer chemisch maximalen Stromstärke bestimmt werden. Die maximale Stromstärke kann von der Art der Redox-Reaktion im Rahmen der Elektrolyse abhängen. Außerdem ist die Stromstärke üblicherweise abhängig von einem Material, einer Form, einer Oberfläche und einem Abstand der Elektroden im Reaktionsgefäß. Derartige Parameter können bezüglich eines verwendeten Reaktionsgefäßes vorab bestimmt und als Konstante verwendet werden.

Die Stromstärke kann maximiert werden, um eine Konzentration des Reinigungsmittels in der Flüssigkeit zu maximieren. Es kann berücksichtigt werden, dass die Konzentration wie die Stromstärke nach oben beschränkt ist.

In einer weiter bevorzugten Ausführungsform sind mehrere Stromstärken vorbestimmt, denen jeweils eine Konzentration zugeordnet ist. Beispielsweise analytisch, stöchiometrisch oder experimentell kann bestimmt werden, welche Stromstärke zu welcher Konzentration korrespondiert. Für unterschiedliche Anwendungsfälle des Reinigungsmittels zur Reinigung einer Oberfläche, insbesondere in einem Haushalt, können vorbestimmte Konzentrationen bzw. Stromstärken einmalig festgelegt und in der Folge leicht gesteuert werden. Eine Vorrichtung zur Umsetzung des Verfahrens kann auf diese Weise einfach und kostengünstig ausgeführt sein.

Es ist besonders bevorzugt, dass das Salz Kochsalz (NaCl) umfasst. Das Reinigungsmittel kann Natriumhypochlorit (NaOCl) umfassen, das auch als Natronbleichlauge bekannt ist. Das Reinigungsmittel und vorübergehende Reaktionsprodukte können in auftretenden Konzentrationen unbedenklich für eine Bedienperson sein. Wasser und Kochsalz können kostengünstig bereitgestellt werden. In einem üblichen Haushalt können beide Grundstoffe in ausreichenden Mengen verfügbar sein. Außerdem kann im Rahmen der elektrolytisch erzwungenen Redox-Reaktion zur Bildung von NaOCl auch Chlor freigesetzt werden, welches eine reinigende oder keimabtötende Wirkung aufweisen kann.
wobei der Strom in Abhängigkeit einer wirksamen Oberfläche einer Elektrode gesteuert wird. In einer weiteren Ausführungsform wird der Strom in Abhängigkeit einer wirksamen Oberfläche einer Elektrode gesteuert. Je größer diese Oberfläche ist, desto rascher kann die elektrolytische Umwandlung erfolgen. Dabei kann berücksichtigt werden, dass die Elektrode anders als flach geformt sein kann oder eine beispielsweise poröse, zerklüftete oder gefaltete Struktur aufweisen kann, sodass die wirksame Oberfläche größer sein kann als durch die äußeren Abmessungen der Elektrode nahegelegt ist.

Nach einem weiteren Aspekt der vorliegenden Erfindung umfasst eine Vorrichtung zur Bereitstellung eines Reinigungsmittels ein Reaktionsgefäß zur Aufnahme einer wässrigen Lösung eines vorbestimmten Salzes; wobei im Reaktionsgefäß zwei Elektroden angebracht sind; eine erste Zugabeeinrichtung für Wasser in das Reaktionsgefäß; eine zweite Zugabeeinrichtung für ein vorbestimmtes Salz in das Reaktionsgefäß; und eine Gleichspannungsquelle. Die Gleichspannungsquelle ist mit den Elektroden verbunden, sodass ein elektrischer Strom durch die Lösung verursacht werden kann, um mittels einer Redox-Reaktion das Reinigungsmittel aus der wässrigen Lösung zu bilden. Ferner ist ein Stromsensor vorgesehen, der dazu eingerichtet ist, die Stärke eines durch die Lösung fließenden elektrischen Stroms zu bestimmen; und eine Steuervorrichtung, die dazu eingerichtet ist, Wasser und Salz in einem derartigen Verhältnis ins Reaktionsgefäß zuzuführen, dass sich eine vorbestimmte Stromstärke einstellt.

Die vorbestimmte Stromstärke kann in Abhängigkeit eines Benutzerwunsches bezüglich einer Konzentration von Reinigungsmittel in der Flüssigkeit verändert werden. Die Vorrichtung und insbesondere die Steuervorrichtung sind bevorzugt dazu eingerichtet, ein hierin beschriebenes Verfahren auszuführen. Dazu kann die Steuervorrichtung eine elektronische Verarbeitungseinrichtung umfassen, die beispielsweise in Form eines programmierbaren Mikrocomputers oder Mikrocontrollers gebildet ist. Das Verfahren kann in Form eines Computerprogrammprodukts mit Programmcodemitteln vorliegen. Das Computerprogrammprodukt kann auf einem computerlesbaren Datenträger abgespeichert sein. Merkmale oder Vorteile des Verfahrens können auf die Vorrichtung übertragen werden oder umgekehrt.

Es ist bevorzugt, dass die Vorrichtung eine mit dem Reaktionsgefäß verbundene Ausgabevorrichtung umfasst, um Flüssigkeit, in der das Reinigungsmittel gebildet ist, an einer zu reinigenden Stelle bereitzustellen, insbesondere direkt an der zu reinigenden Stelle zu bilden, z.B. in einer Bodendüse des Reinigungsgeräts. So kann das Reinigungsmittel nach seiner Bildung mit sehr geringer Verzögerung zur Behandlung bzw. Reinigung eingesetzt werden. Einem möglichen chemikalischen Zerfallsprozess des Reinigungsmittels in der Flüssigkeit kann vorgebeugt werden. Eine Erzeugung von Reinigungsmittel, das nicht bzw. nicht unmittelbar verbraucht wird, kann reduziert sein.

Nach einem weiteren Aspekt der vorliegenden Erfindung umfasst ein Reinigungsgerät eine hierin beschriebene Vorrichtung. Das Reinigungsgerät kann zum Einsatz in einem Haushalt vorgesehen sein und in unterschiedlichen Ausführungsformen handgeführt, als Stielgerät oder als automatischer bzw. autonomer Bodenreinigungsroboter ausgeführt sein.

Nach einem weiteren Aspekt der vorliegenden Erfindung umfasst ein Computerprogramm[produkt] Befehle, die bewirken, dass die vorhergehend beschriebene Vorrichtung oder das vorhergehend beschriebene Reinigungsgerät die Schritte des vorhergehend beschriebenen Verfahrens ausführt.

Die Erfindung wird nun unter Bezug auf die beiliegenden Figuren genauer beschrieben, in denen:
- Figur 1: ein Reinigungsgerät zum Einsatz in einem Haushalt;
- Figur 2: ein Ablaufdiagramm eines Verfahrens; und
- Figur 3: eine Veranschaulichung einer Elektrolyse
darstellt.

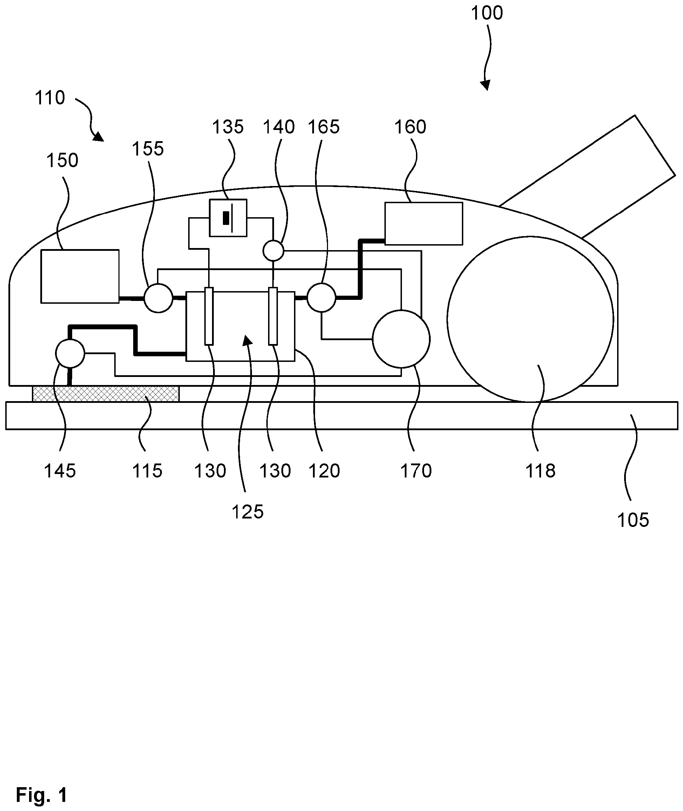

Figur 1 zeigt ein Reinigungsgerät 100 zum Einsatz in einem Haushalt. Das Reinigungsgerät 100 ist dazu eingerichtet, ein Substrat 105 zu bearbeiten, insbesondere eine Bodenfläche, beispielsweise Parkett, Laminat, Estrich oder Linoleum. Zusätzlich zu der im Folgenden diskutierten Wischfunktion kann das Reinigungsgerät 100 auch für eine Trockenreinigung einsetzbar sein, beispielsweise durch Saugen oder Kehren. Vorliegend ist das Reinigungsgerät beispielhaft als handgeführte Bodenreinigungsdüse mit einem Stiel ausgeführt. Das Reinigungsgerät 100 kann auch eine Antriebseinrichtung umfassen und zur autonomen Bearbeitung einer Bodenfläche eingerichtet sein. In noch einer weiteren Ausführungsform kann das Reinigungsgerät 100 ein handgehaltenes Gerät ohne Stiel umfassen, das beispielsweise auch zur Reinigung einer Oberfläche eines Tisches, eines Herdes, eines Fenster- oder Spiegelglases oder einer Fliese verwendet werden kann.

Das Reinigungsgerät 100 umfasst eine Vorrichtung 110 zur Bereitstellung eines Reinigungsmittels möglichst unmittelbar am Ort einer durchzuführenden Reinigung. Am Reinigungsgerät 100 ist in einem vorderen Bereich ein Kissen 115 zur mechanischen Bearbeitung des Substrats 105 vorgesehen. Bereitgestelltes Reinigungsmittel kann in diesem Bereich ausgegeben werden. In einem hinteren Bereich des Reinigungsgeräts 100 ist beispielhaft ein Stütz- oder Antriebsrad 118 vorgesehen. Über dem Rad 118 ist eine Aufnahme für einen Stiel zu erkennen, mit dem das Reinigungsgerät 100 über das Substrat 105 geführt werden kann.

Die Vorrichtung 110 umfasst ein Reaktionsgefäß 120 zur Aufnahme einer wässrigen Lösung 125. Im Reaktionsgefäß 120 sind zwei Elektroden 130 zueinander beabstandet angebracht. Mittels einer Gleichspannungsquelle 135 kann ein elektrischer Strom durch die wässrige Lösung 125 bewirkt werden. Die bereitgestellte Gleichspannung kann eine Kleinspannung umfassen, sodass keine Gefahr für eine Person besteht. Bevorzugt liegt die Gleichspannung unter ca. 12 V, weiter bevorzugt im Bereich von ca. 5 V oder darunter. Die Gleichspannungsquelle 135 kann ein Netzteil umfassen, das mittels eines Anschlusskabels mit einem Stromnetz verbunden werden kann. Alternativ kann ein lokaler Energiespeicher verwendet werden, beispielsweise in Form einer Batterie bzw. eines Akkumulators. Die Gleichspannungsquelle 135 ist bevorzugt dazu eingerichtet, eine Gleichspannung in einer konstanten Höhe bereitzustellen. In manchen Ausführungsformen kann die Höhe der bereitgestellten Spannung steuerbar sein. Die Steuerung kann in diskreten Schritten oder kontinuierlich erfolgen.

In einer Zuleitung zwischen einer der Elektroden 130 und der Gleichspannungsquelle 135 ist bevorzugt ein Stromsensor 140 vorgesehen. Der Stromsensor 140 ist dazu eingerichtet, ein Sensorsignal bereitzustellen, das auf die Stärke eines durch die wässrige Lösung 125 fließenden elektrischen Stroms hinweist. Der Stromsensor 140 kann auf eine beliebige Weise implementiert sein, beispielsweise als Shunt-Widerstand oder als thermische Messeinrichtung. In einer anderen Ausführungsform kann ein Magnetfeld bestimmt werden, welches sich auf Grund des fließenden Stroms im Bereich der Zuleitung einstellt. Der Stromsensor 140 kann hierbei beispielsweise einen Hall-Sensor umfassen.

Die Lösung 125 kann mittels einer Ausgabevorrichtung 145 im Bereich des Kissens 115 bereitgestellt werden. Die Ausgabevorrichtung 145 kann beispielsweise eine Drossel oder eine Blende umfassen, um einen vorbestimmten Volumenstrom von Flüssigkeit an das Kissen 115 zu leiten. Bevorzugt ist die Ausgabevorrichtung 145 steuerbar und insbesondere als Pumpe oder Ventil ausgeführt. Ein durch die Pumpe bzw. das Ventil fließender Volumenstrom an Flüssigkeit ist in manchen Ausführungsformen kontinuierlich oder in mehreren Stufen steuerbar.

Zur Bereitstellung der wässrigen Lösung 125 im Reaktionsgefäß 120 sind ein erster Behälter 150 mit einer ersten Zugabeeinrichtung 155 sowie ein zweiter Behälter 160 mit einer zweiten Zugabeeinrichtung 165 vorgesehen. Im ersten Behälter 150 ist Wasser und im zweiten Behälter 160 ein vorbestimmtes Salz, insbesondere Kochsalz (NaCl), aufgenommen. Das Kochsalz liegt hierbei bevorzugt in flüssiger Form als hochkonzentrierte Salzlösung vor. Aber auch kristallines Kochsalz, welches durch die Zugabeeinrichtung 165 als Feststoff dem Reaktionsgefäß 125 zugeführt wird, ist nutzbar. Die Behälter 150, 160 können zum Nachfüllen durch einen Benutzer des Reinigungsgeräts 100 eingerichtet sein. Die Zugabeeinrichtungen 155, 165 sind jeweils dazu eingerichtet, eine vorbestimmte Menge bzw. einen vorbestimmten Volumenstrom von Wasser bzw. Salz in das Reaktionsgefäß 120 zu befördern. Die Zugabeeinrichtungen 155, 165 sind bevorzugt als Pumpe ausgeführt, können aber auch Ventile sein, wenn die Ausgabevorrichtung 145 als Pumpe ausgeführt ist.

Eine Steuervorrichtung 170 ist mit den Zugabeeinrichtungen 155, 165, mit der Ausgabevorrichtung 145 sowie mit dem Stromsensor 140 verbunden. Ferner kann eine Verbindung mit der Gleichspannungsquelle 135 vorgesehen sein. Nicht in Figur 1 dargestellt ist ein optionales Bedienelement, mit dem ein Benutzer eine Anforderung bezüglich einer Menge bereitzustellender Reinigungsflüssigkeit oder einer Konzentration von Reinigungsmittel in der Flüssigkeit ausdrücken kann.

Es wird vorgeschlagen, dass die Steuervorrichtung 170 dazu eingerichtet ist, eine Zufuhr von Wasser und Salz in das Reaktionsgefäß 120 sowie bevorzugt einen Abfluss von **wässriger** Lösung 125 aus dem Reaktionsgefäß 120 zu steuern. Im Reaktionsgefäß 120 wird ein Gleichstrom durch die wässrige Lösung 125 geleitet, sodass eine Redox-Reaktion erzwungen wird, bei welcher ein vorbestimmtes Reinigungsmittel gebildet werden kann. Das Wasser (H₂O) aus dem ersten Behälter 150 und das Kochsalz (NaCl) aus dem zweiten Behälter 160 können im Reaktionsgefäß 120 beispielsweise mittels folgender Reaktionen umgebaut werden:

2*NaCl +* 2*H*₂*O* → 2*NaOH* + *N*₂ + *Cl*₂

2*NaOH + Cl*₂ → *NaOCl* + *NaCl + H*₂*O*

Das mittels der zweiten angegebenen Reaktionsgleichung gebildete NaOCl ist auch als Natriumhypochlorit oder Natronbleichlauge bekannt. Es handelt sich dabei um das Natriumsalz der hypochlorigen Säure HCIO. NaOCl hat gute Eigenschaften zur Reinigung und Bindung von Schmutz und kann inaktivierend auf Mikroorganismen wirken.

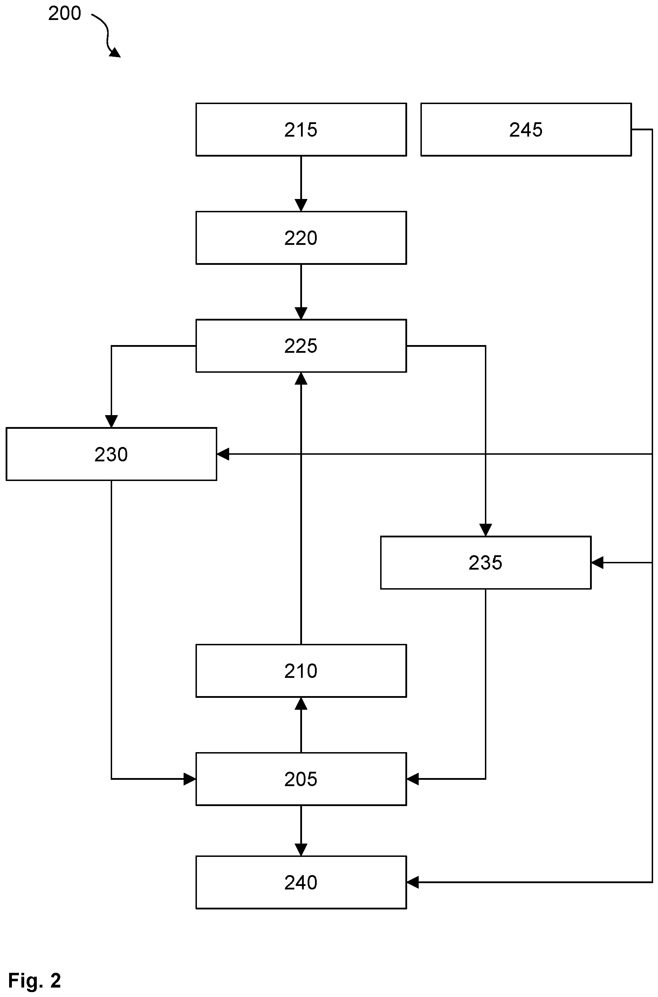

Figur 2 zeigt ein Ablaufdiagramm eines Verfahrens 200 zur Steuerung einer Vorrichtung 110, insbesondere im Rahmen eines Reinigungsgeräts 100.

In einem Schritt 205 findet eine Elektrolyse statt, in welcher eine wässrige Lösung von Kochsalz in eine Redox-Reaktion gezwungen wird, um Reinigungsmittel in Form von Natriumhypochlorit bereitzustellen. Die Stärke eines elektrischen Ist-Stroms, der im Rahmen der Elektrolyse durch die wässrige Lösung 125 fließt, kann in einem Schritt 210 bestimmt werden. Die Höhe des Ist-Stroms wird bevorzugt mittels des Stromsensors 140 bestimmt, der zwischen einer Elektrode 130 und der Gleichspannungsquelle 135 angeordnet sein kann.

In einem Schritt 215 kann eine gewünschte Konzentration von Reinigungsmittel in Flüssigkeit bestimmt werden. Dazu kann ein Benutzerwunsch erfasst werden, der beispielsweise mittels einer Eingabevorrichtung ausgedrückt sein kann. Es können unterschiedliche Konzentrationen vorbestimmt sein, von denen der Benutzer eine auswählen kann. Eine höchste anwählbare Konzentration kann in Abhängigkeit geltender Bedingungen im Bereich des Reaktionsgefäßes 120 bestimmt sein.

In einem Schritt 220 kann eine Soll-Stromstärke bestimmt werden, die der gewünschten Konzentration zugeordnet ist. Diese Zuordnung kann beispielsweise tabellarisch, formelhaft, mittels eines Kennfeldes oder auf eine andere Weise bestimmt sein.

In einem Schritt 225 können die im Schritt 210 bestimmte Ist-Stromstärke und die im Schritt 220 bestimmte Soll-Stromstärke miteinander verglichen werden. Entsprechen die Stromstärken einander ausreichend genau, so liegt eine Konzentration von Reinigungsmittel in der wässrigen Lösung 125 auf dem gewünschten Niveau. Übersteigt die Ist-Stromstärke die Soll-Stromstärke um ein vorbestimmtes Maß, so ist die Konzentration von Reinigungsmittel in der wässrigen Lösung 125 zu hoch. In diesem Fall kann in einem Schritt 230 Wasser aus dem ersten Behälter 150 in das Reaktionsgefäß 120 zugegeben werden. Das zugegebene Wasser kann die elektrolytische Reaktion im Schritt 205 beeinflussen, sodass die Ist-Stromstärke wieder absinkt.

In entsprechender Weise kann im Schritt 225 bestimmt werden, dass die Soll-Stromstärke um einen vorbestimmten Betrag größer als die Ist-Stromstärke ist. In diesem Fall kann in einem Schritt 235 Salz aus dem zweiten Behälter 160 in das Reaktionsgefäß 120 zugeführt werden. Dadurch kann eine Konzentration von Salz in der Lösung 125 ansteigen, sodass die im Schritt 205 ablaufende elektrolytische Reaktion beeinflusst werden kann. Durch die gesteigerte Salinität der wässrigen Lösung 125 können mehr freie Ionen verfügbar sein, um an der Redox-Reaktion teilzunehmen. In der Folge kann die Ist-Stromstärke ansteigen. Die Zufuhr des Salzes kann hierbei als Flüssigkeit, insbesondere als in Wasser gelöstes Salz, oder als Feststoff erfolgen.

Das Verfahren 200 kann ausgeführt werden, um eine vorbestimmte Menge wässriger Lösung 125 mit einer vorbestimmten Konzentration von Reinigungsmittel bereitzustellen. Die Gleichspannungsquelle 135 kann dann abgeschaltet werden, und die bereitgestellte Lösung 125 kann durch Abfuhr in einem Schritt 240 zur Reinigung des Substrats 105 verwendet werden. Ist ein bereitgestellter Vorrat an Lösung 125 erschöpft, so kann das Reaktionsgefäß 120 erneut mit Wasser und Salz beschickt und die Gleichspannungsquelle 135 wieder eingeschaltet werden, um eine weitere vorbestimmte Menge gelösten Reinigungsmittels bereitzustellen.

In einer anderen Ausführungsform kann das Verfahren 200 auch kontinuierlich ausgeführt werden, dabei kann ein variabler oder kontinuierlicher Abfluss von Flüssigkeit 240 aus dem Reaktionsgefäß 120 durch die Ausgabevorrichtung 145 stets durch einen entsprechenden Zufluss von Wasser und Salz kompensiert werden. Ein Volumenstrom von Flüssigkeit, der das Reaktionsgefäß 120 verlässt, kann durch einen Benutzer einstellbar sein. In einem Schritt 245 kann eine Anforderung für einen vorbestimmten Volumenstrom bestimmt werden. Die Zugabe von Wasser im Schritt 230 und/oder Salz im Schritt 235 in das Reaktionsgefäß 120 können in Abhängigkeit des bestimmten Volumenstroms gesteuert werden. Es ist zu beachten, dass hierbei nur eine kombinierte Menge von Wasser und Salz bestimmt wird, die dem Reaktionsgefäß 120 zugeführt werden, während ein Verhältnis zugeführter Substanzen in Abhängigkeit des Vergleichs von Stromstärken im Schritt 225 gesteuert wird.

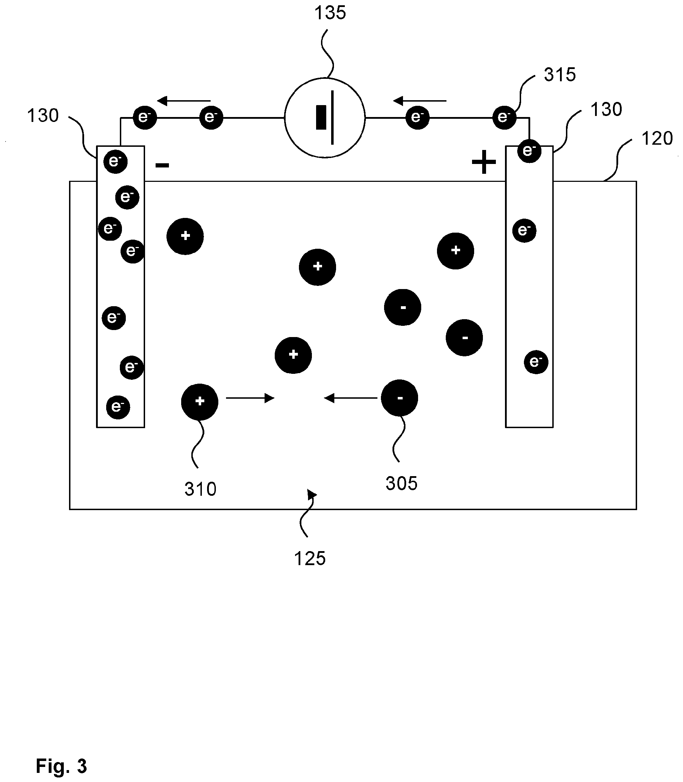

Figur 3 zeigt eine Veranschaulichung einer Elektrolyse. Im Reaktionsgefäß 120 befindet sich die wässrige Lösung 125, die zunächst nur in Wasser gelöstes Salz umfasst. Bei der Lösung werden negativ geladene Anionen 305 und positiv geladene Kationen 310 gebildet. Wird nun an die Elektroden 130 eine elektrische Gleichspannung angelegt, so werden die Anionen 305 zur einen und die Kationen 310 zur anderen Elektrode 130 bewegt. Dadurch entsteht zwischen den Elektroden 130 eine Potentialdifferenz, die ausgeglichen wird, indem Elektronen 315 von der einen Elektrode 130 durch die Gleichspannungsquelle 135 zur anderen Elektrode 130 fließen.

Ionen 305, 310, die sich im Bereich einer der Elektroden 130 ansammeln, erfahren durch den fließenden elektrischen Strom eine Energiezufuhr, so dass eine oder mehrere Redox-Reaktionen möglich sind. Dabei werden die Ionen 305, 310 in andere Reaktionsprodukte umgebaut, von denen eines das gewünschte Reinigungsmittel umfasst.

### Bezugszeichen

- 100: Reinigungsgerät
- 105: Substrat
- 110: Vorrichtung
- 115: Kissen
- 118: Rad
- 120: Reaktionsgefäß
- 125: wässrige Lösung
- 130: Elektrode
- 135: Gleichspannungsquelle
- 140: Stromsensor
- 145: Ausgabevorrichtung
- 150: erster Behälter
- 155: erste Zugabeeinrichtung
- 160: zweiter Behälter
- 165: zweite Zugabeeinrichtung
- 170: Steuervorrichtung

- 200: Verfahren
- 205: Elektrolyse
- 210: Ist-Stromstärke bestimmen
- 215: gewünschte Konzentration bestimmen
- 220: Soll-Stromstärke bestimmen
- 225: Stromstärken vergleichen
- 230: Wasser zugeben
- 235: Salz zugeben
- 240: Flüssigkeit abführen
- 245: gewünschte Menge bestimmen

- 305: Anion
- 310: Kation
- 315: Elektron

## Patentansprüche

1. Verfahren (200) zum Bereitstellen eines Reinigungsmittels, wobei das Verfahren (200) folgende Schritte umfasst:
- Zuführen (230, 235) von Wasser und einem vorbestimmten Salz in ein Reaktionsgefäß (120), sodass eine wässrige Lösung (125) des Salzes entsteht;
- Anlegen einer vorbestimmten elektrischen Gleichspannung an Elektroden (130) im Reaktionsgefäß (120), sodass ein elektrischer Strom durch die Lösung (125) fließt, um mittels einer Redox-Reaktion (205) das Reinigungsmittel zu bilden;
- Bereitstellen (240) von Flüssigkeit, in der das Reinigungsmittel gebildet ist, aus dem Reaktionsgefäß (120); **dadurch gekennzeichnet, dass**
- die Stärke des durch das Reaktionsgefäß (120) fließenden elektrischen Stroms bestimmt (210) wird; und
- ein Verhältnis von zugeführtem Wasser und zugeführtem Salz derart gesteuert (230, 235) wird, dass sich eine vorbestimmte Stromstärke einstellt.

2. Verfahren (200) nach Anspruch 1, wobei zugeführte (230, 235) Mengen von Wasser und Salz eine abgeführte (240) Menge von Reinigungsmittel in Flüssigkeit ausgleichen.

3. Verfahren (200) nach Anspruch 1 oder 2, wobei kontinuierlich Wasser und/oder Salz zugeführt und Flüssigkeit mit gebildetem Reinigungsmittel abgeführt (240) wird.

4. Verfahren (200) nach einem der vorangehenden Ansprüche, wobei die vorbestimmte Stromstärke in Abhängigkeit einer gewünschten Konzentration von gebildetem Reinigungsmittel in der bereitgestellten Flüssigkeit bestimmt (220) wird.

5. Verfahren (200) nach Anspruch 4, wobei die vorbestimmte Stromstärke bezüglich einer chemisch maximalen Stromstärke bestimmt (220) wird.

6. Verfahren (200) nach einem der Ansprüche 4 oder 5, wobei die Stromstärke maximiert (220) wird, um eine Konzentration des Reinigungsmittels in der Flüssigkeit zu maximieren.

7. Verfahren (200) nach einem der Ansprüche 4 bis 6, wobei mehrere Stromstärken vorbestimmt sind, denen jeweils eine Konzentration zugeordnet ist.

8. Verfahren (200) nach einem der vorangehenden Ansprüche, wobei das Salz Kochsalz umfasst.

9. Verfahren (200) nach einem der vorangehenden Ansprüche, wobei der Strom in Abhängigkeit einer wirksamen Oberfläche einer Elektrode (130) gesteuert wird.

10. Vorrichtung (110) zur Bereitstellung eines Reinigungsmittels, wobei die Vorrichtung folgende Elemente umfasst:
- ein Reaktionsgefäß (120) zur Aufnahme einer wässrigen Lösung (125) eines vorbestimmten Salzes;
- wobei im Reaktionsgefäß (120) zwei Elektroden (130) angebracht sind;
- eine erste Zugabeeinrichtung (155) für Wasser in das Reaktionsgefäß (120);
- eine zweite Zugabeeinrichtung (165) für ein vorbestimmtes Salz in das Reaktionsgefäß (120);
- eine Gleichspannungsquelle (135), die mit den Elektroden (130) verbunden ist, sodass ein elektrischer Strom durch die Lösung (125) verursacht werden kann, um mittels einer Redox-Reaktion das Reinigungsmittel zu bilden;
- einen Stromsensor, der dazu eingerichtet ist, die Stärke eines durch die Lösung (125) fließenden elektrischen Stroms zu bestimmen;
- eine Steuervorrichtung (170), die dazu eingerichtet ist, Wasser und Salz in einem derartigen Verhältnis ins Reaktionsgefäß (120) zuzuführen, dass sich eine vorbestimmte Stromstärke einstellt.

11. Vorrichtung (110) nach Anspruch 10, umfassend eine mit dem Reaktionsgefäß (120) verbundene Ausgabevorrichtung (145), um Flüssigkeit, in der das Reinigungsmittel gebildet ist, an einer zu reinigenden Stelle bereitzustellen.

12. Reinigungsgerät (100), umfassend eine Vorrichtung (110) nach Anspruch 11.

13. Computerprogramm[produkt], umfassend Befehle, die bewirken, dass eine Vorrichtung nach einem der Ansprüche 10 bis 11 oder ein Reinigungsgerät nach Anspruch 12 die Schritte des Verfahrens nach einem der Ansprüche 1 bis 9 ausführt.
